# EUROPEAN PATENT SPECIFICATION

(11) **EP 4 771 459 B1**
(45) Date of publication and mention of the grant of the patent: **07.10.2026**
(21) Application number: 25785066.9
(22) Date of filing: 07.10.2025
(51) Int. Cl.: G05D 7/06

(54) **FLUIDIC SYSTEM**
FLUIDISCHES SYSTEM
SYSTÈME FLUIDIQUE

(30) Priority: 09.10.2024 IT 202400022434
(43) Date of publication of application: 08.07.2026
(73) Proprietor: Actuator Solutions GmbH, 91710 Gunzenhausen (DE)
(72) Inventor: KÖPFER, Markus, 73495 Stoedtlen-Regelsweiler (DE); STOCK, Manuel, 91586 Lichtenau (DE); PFAHLER, Jürgen, 91802 Meinheim (DE)
(74) Representative: Novagraaf Group
(86) International application number: PCT/EP2025/078756
(87) International publication number: WO 2026/077947

(56) References cited:
- DE-A1- 4 216 075
- DE-A1- 4 322 731
- US-A- 4 191 215
- US-A1- 2019 243 391
- US-A1- 2022 283 596

## Description

The present invention is inherent to an improved fluidic circuit to precisely control and switch the output of proportional valves connected in parallel, and also to systems incorporating such fluidic circuit and to the mode of operation of those.

The use of orifice-based proportional valves and their operating principle has been known for a long time, as for example described in EP 0110325, and in brief consists in measuring the pressure upstream and downstream of an orifice placed after a proportional valve and regulate the opening of the valve accordingly.

This simple mechanism can be used as starting point for developing more complex fluidic circuits with proportional valves, such as described for example in US 11454993 describing how to regulate the flow of two proportional valves in series.

A solution of particular interest is when two proportional valves are connected in parallel, i.e. their outlets, usually in the form of channels or pipes, at a certain point converge into a common outlet to extend the fluidic output dynamic range, such as described in US 9977437, in which two proportional valves are selectively brought in the open configuration by a pressure balance between an upper and a lower pressure chamber. This solution has the drawback of delays in operation associated with the need to pressurize/depressurize the upper and lower pressure chamber, as it is the pressure gradient in the chamber that selects the mode of operation determining which valve is closed and which valve is opened. Moreover, it requires an internal and external feedback system to ensure accurate repeated operation of the system.

US 2022/0283596 discloses another system including a plurality of flow-controlling apparatuses arranged in parallel whose outlets converge into a common manifold connected to a processing chamber where the fluids controlled by the system are used. Each flow controller has a fluid supply coupled to an inlet with a proportional valve for metering the mass flow of the process fluids into a volume where a pressure sensor measures the fluid pressure. A flow restrictor and a shut-off valve are arranged between the volume and the outlet, either in this sequence or a reversed sequence, and the shut-off valve is used to stop the flow when the controlled fluid is not needed in the process chamber. The flow controller may optionally comprise an additional pressure sensor downstream of the flow restrictor and the shut-off valve, to measure the pressure differential across the flow restrictor. All flow restrictors are the same, since the flow metering is provided by the proportional valves.

DE 4216075 discloses another system including a plurality of flow-controlling apparatuses arranged in parallel whose outlets converge into a common manifold connected to a user. In this case, there is a single fluid supply for all flow controllers and no proportional valves are used to meter the flow, but rather restrictors having apertures of different diameter each controlled by a shut-off valve. By properly combining the open and closed states of the shut-off valves, the system can provide a metered flow over a wide range going from the flow rate of the smallest flow restrictor to a flow rate equal to the sum of the flow rates of all flow restrictors, with step increments equal to the minimum flow rate.

US 4191215 discloses a very similar system in which the flow in each flow controller is switched by directional control solenoid valves that direct the flow either through a flow restrictor to a user or through an identical flow restriction to a vent. Therefore, by replacing the shut-off valves with directional valves, there will always be a constant flow through each valve and, since the inlet pressure regulator will always see a constant load, it can maintain a very constant pressure to the valves.

DE 4322731 relates to valves for regulating fluid flows with an actuator made of electrically heatable shape-memory material, which adjusts a closure element in its position relative to the valve seat against the restoring force of a spring in accordance with a temperature-related change in length, caused by the flow of the fluid being controlled by the valve. An embodiment of the present invention uses similar valves.

US 2019243391 discloses a fluid control device comprising all the components listed in the preamble of claim 1 plus, as common components for the two parallel flow passages, an inflow pressure sensor provided on the upstream side of the proportional valves and a downstream pressure sensor provided on the downstream side of the flow restrictors. This means that the device includes four pressure sensors, one in each of the two flow passages plus the above-mentioned two common upstream and downstream sensors.

The object of the present invention is to be able to precisely regulate the output of a higher-flow branch and a lower-flow branch connected in parallel in a fluidic circuit while also minimizing the number of components. This object is achieved by means of a fluidic system as recited in claim 1.

The main advantage of the present fluidic circuit is that of achieving a precise regulation of the flow by using proportional valves as in US 2022/0283596, therefore with a much greater precision than in DE 4216075 or US 4191215, but without requiring shut-off valves nor additional pressure sensors. In fact, due to the constant fluid communication between the two pressure sensors in the two branches and to the alternative operation of the two proportional valves (i.e., when one is open the other is closed), the pressure differential across the flow restrictor in the branch in use can be precisely measured just by said two pressure sensors thanks to an electronics control module that is configured for said purpose.

The invention will be further illustrated according to the following figures wherein:
Figure 1 is a schematic representation of a fluidic circuit included in a fluidic system according to the present invention,
Figure 2 is a schematic representation of a cross-sectional view of a first embodiment of a fluidic circuit included in a fluidic system according to the present invention,
Figures 3A and 3B are schematic representations in two different section planes of a cross-sectional view of a fluidic system according to the present invention, respectively limited to the upper portion and lower portion thereof.

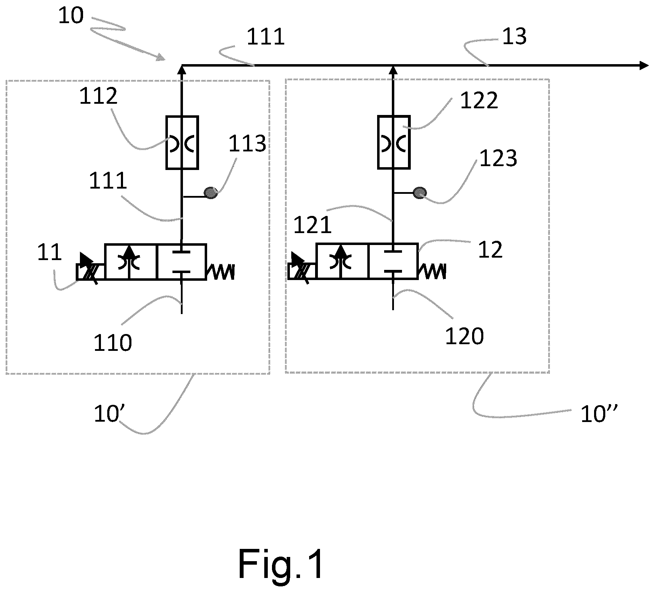

It is to be underlined that dimensions and/or dimensional ratios in the figures in some cases may not be correct but have sometimes been altered to improve figure readability, with exemplary references to orifices diameters and sizing, shown equal to each other in figure 1.

A schematic representation of a fluidic circuit 10 included in a fluidic system according to the present invention is shown in figure 1, in which two two-ways proportional valves 11 and 12 are connected in parallel to a common outlet region, represented by outlet channel 13.

Each of these valves 11, 12 has, respectively, an inlet 110, 120 and an outlet 111, 121, and on each of the outlet channels/regions 111, 121 is present a flow restrictor 112, 122, with respective first and second pressure sensors 113, 123 present between the two-way proportional valves 11, 12 and the respective flow restrictors 112, 122.

The mode in which the fluidic circuit of figure 1 operates is by having only one of the proportional valves 11, 12 opened and the other one closed; in this way it is possible to regulate the proportionality of the active valve and therefore to precisely control the delivered fluid, by using the pressure redouts of both pressure sensors 113 and 123. The pressure sensor placed between the opened valve and the restrictor in its outlet acts as upstream pressure measurement device, while the pressure sensor placed between the closed valve and the restrictor placed in its outlet acts as downstream pressure measurement device for the proportionally opened valve.

Proportional valve 11 with its inlet 110, outlet 111, pressure sensor 113 and restrictor 112 defines a first flow branch 10' of the fluidic circuit 10, whereas proportional valve 12 with its inlet 120, outlet 121, pressure sensor 123 and restrictor 122 defines a second flow branch 10" of the fluidic circuit 10. It is to be noted that, although not visible in the schematic diagram of Fig. 1, the two restrictors 112, 122 have apertures of different diameter, thus defining a lower-flow branch and a higher-flow branch.

The above way to operate the fluidic circuit 10 allows for a precise regulation of the output flow, minimizes the hardware needed (2 pressure sensors instead of 4 as in US 2019243391) and, as already outlined, has faster response times with respect to the solution described in US 9977437 as there is no need to balance or equilibrate the pressures in the two outlets 111, 121.

It is to be underlined that the fluidic circuit 10 of figure 1 may comprise additional and optional elements downstream of the converging region 13, for example a different type of valve to regulate a different type of flow. In a preferred embodiment the different type of valve is a shut-off valve (no intermediate position or proportional) and the different type of flow can be characterized by being a different fluid with respect to the ones regulated by the first and second proportional valves 11, 12 and/or a fluid regulated at a much higher flow with respect to the higher-flow branch, with the shut-off valve having a section of passage such that the flow therethrough is preferably at least 3 times the maximum flow coming out from the higher-flow branch, and even more preferably at least 5 times such flow.

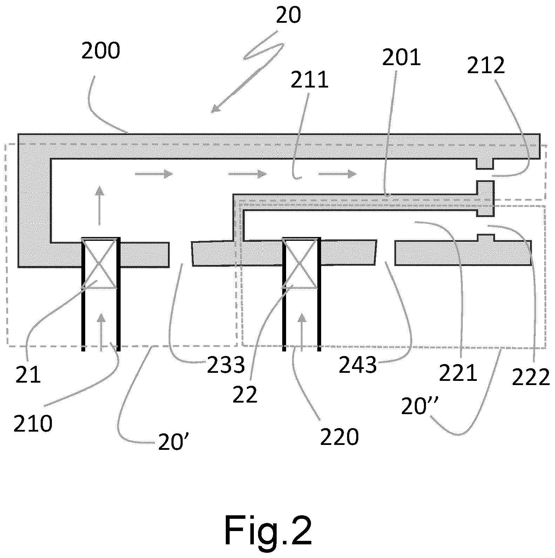

A schematic representation of a cross-sectional view of a preferred embodiment of a fluidic circuit system 20 included in a fluidic system according to the present invention is shown in figure 2. Valves 21 and 22 and their relative inlets 210, 220 and outlet channels/volumes 211, 221 are mounted within a fluidic circuit body 200, presenting openings 233, 243 for connecting the outlets with the first and second pressure sensor (not shown). Element 201 of the fluidic circuit body 200 acts as fluidic separator between the first fluidic branch 20' and the second fluidic branch 20". The first flow restrictor 212 is formed by the shortened distance between the fluidic separator 201 and the upper portion of the fluidic circuit body 200, whereas the second flow restrictor 212 is formed by the shortened distance between the fluidic separator 201 and the lower portion of the fluidic circuit body 200.

In figure 2 it is shown the case when the first flow branch 20' is active, namely valve 21 is in an opened status (even if not necessarily fully opened), whereas valve 22 is closed. The fluid flows into the circuit body 200 according to the depicted arrows. The other operating mode (not shown) simply has valve 21 closed and valve 22 in an opened status.

The embodiment shown in figure 2 represents one of the most compact ways to realize a fluidic circuit included in a fluidic system according to the present invention.

The term "flow restrictor" indicates a narrowing in the fluidic outlet, preferably achieved with an orifice, and orifices, nozzles and flow restrictors are to be considered equivalent terms in the following. As the purpose of the present invention is a precise and dynamically extended output flow regulation, the diameters of the flow restrictors 212, 222 are different in order to have a higher-flow branch 20" and a lower-flow branch 20', each with independent and precise regulation via the opening of the corresponding proportional valve 22, 21.

Flow restrictors may have geometries that are not perfectly circular, such as the ones obtained by crimping the piping of an outlet in the form of a channel/pipe, while in some instances they are much more regular, such as in the case of calibrated orifices. In the case of the embodiment of figure 2, they are determined by a narrowing of a flow conduct at the outlets 211, 221 of the proportional valves. When reference will be made in the following to restrictor diameter, it is intended the smallest inscribed circle diameter, which will be coincident with the aperture diameter in the case of calibrated orifices.

The preferred diameters for the lower-flow branch restrictor are comprised between 0,1 and 0,4 mm, while the preferred diameters for the higher-flow branch restrictor are comprised between 0,5 mm and 2 mm.

Preferably, the output flow upper limit for the lower-flow branch is 0,2 l/min, whereas the upper limit for the higher-flow branch is 1 l/min.

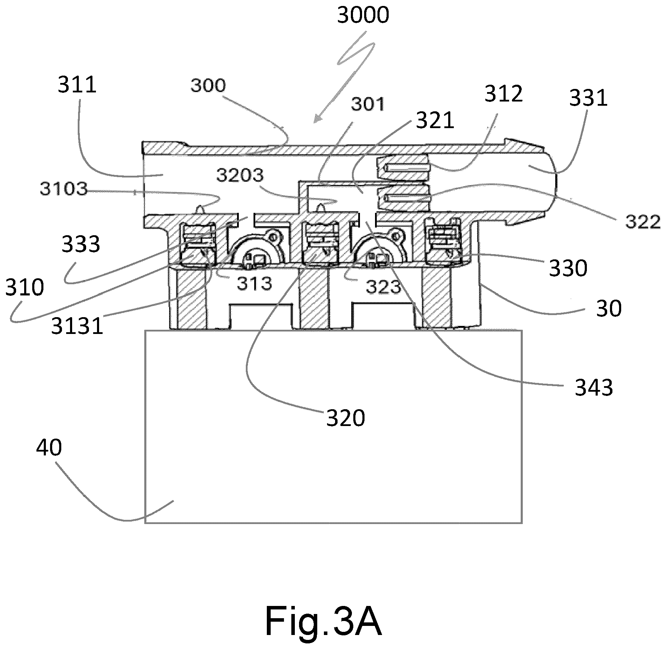

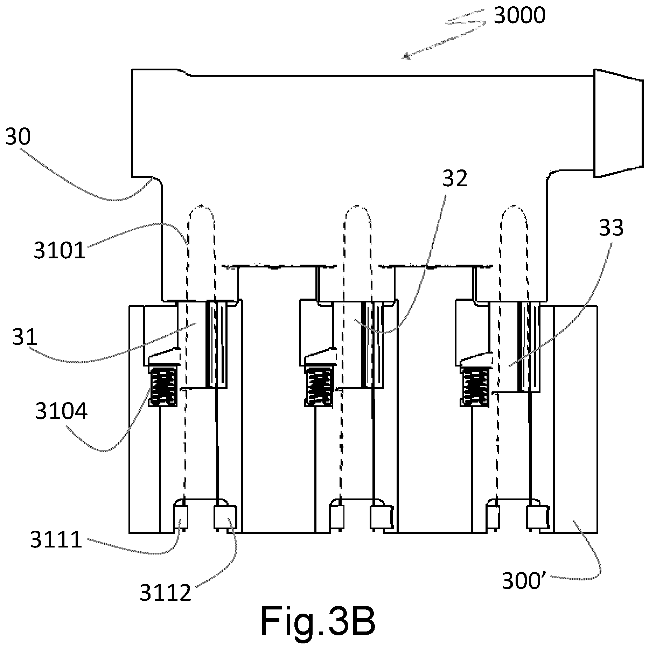

Two partial schematic representations of a cross-sectional view of a fluidic system 3000 according to the present invention are shown in figures 3A and 3B. The term "fluidic system" is intended to encompass, in a broad sense, a fluidic circuit with its electronic control module.

This embodiment is representative of the possibilities of having more valves with respect to a first and second proportional valve, and an integrated electronic control module, i.e. the electronic control module acts also as supporting element for one or more components of the fluidic system.

In particular, fluidic system 3000 comprises three valves 31, 32, 33, valves 31 and 32 being proportional valves and valve 33 being instead of the shut-off type to flush/clean the circuit downstream of first and second flow restrictors 312, 322.

The fluidic system 3000 can be virtually divided in a first part, being the fluidic circuit 30 as such including pressure sensors 313 and 323, and a second part 40 comprising support means for the three valves 31, 32, 33 and for other components, including control circuitry. The second part 40 preferably comprises a Printed Circuit Board (PCB) 300' performing the function also of electronic control module.

The fluidic circuit 30 is very similar to the schematic representation of figure 2 and comprises a body 300 with a fluidic separator 301, outlets 311, 321 connected to pressure sensors 313, 323 through respective openings 333, 343, and orifices 312, 322. The fluidic circuit 30, as already outlined, also comprises outlet 331 of valve 33.

Valve closing may be obtained, in general, by a valve plunger 330 abutting on a corresponding seat within the valve body 300, such as described in US 4245815, which is preferably the case for shut-off valve 33, or by a valve plunger 310, 320 provided with a conical tip occluding a conical hole, which is preferably the case for proportional valves 31, 32 with tips 3103, 3203 protruding into the outlet channels 311, 321.

In this embodiment, valves 31, 32 and 33 are preferably SMA-based valves, i.e. valves actuated by means of a shape memory alloy wire 3101 in U-shaped configuration straddling the valve plunger 310 through a groove 3131 to open the valve upon activation of the SMA wire, with a spring acting as return means upon deactivation of the SMA wire. Valve 31 has also an end-stop sensor, in particular a compressible spring 3104, apt to close an electronic circuit to limit the current to the SMA wire 3101 to avoid its "over-actuation" that may lead to a premature failing.

SMA wire 3101 has its extremities crimped to terminals 3111, 3112 fixed to PCB 300' respectively on the front side and back side thereof, with current provided through said terminals. All the elements described with reference to valve 31 are present also for valves 32 and 33 that have the same structure, except for the tip of the valve plungers 310, 320, 330 as mentioned above, but their corresponding elements have not been referenced by numerals to avoid compromising figure readability.

It is to be underlined that although figures 3A, 3B and the use of SMA-based valves represent a preferred embodiment, the present invention is not limited to a specific type of proportional valve, other possible types being piezoelectric, solenoid or electrical motor actuated valves.

Such valves and their use in fluidic systems are widely known to a person skilled in the art, see for example EP 2615951 for SMA-based valves, US 5445185 for piezoelectric valves, WO 2023062582 for solenoid valves, EP 0884511 for miniaturized motor valves.

Moreover, fluidic circuits and systems according to the present invention are not limited to any specific type of fluid and they may be usefully employed, for example, for dispensing air, liquids (such as oil, water, coffee, milk) and their mixtures, even though the most advantageous use is for air flows exploiting the so-called Venturi effect to suck a liquid into an output channel (not shown in the figures) to precisely dose it. This solution has the advantage that the liquid will not be present upstream of the flow restrictors and this simplifies the structure of the fluidic circuit, as there is no need to extensively use electrical insulators and insulator coatings.

## Claims

1. A fluidic system comprising a fluidic circuit (10; 20; 30) comprising:
- a first branch (10'; 20') comprising a first proportional valve (11; 21; 31) having a first inlet (110; 210) and a first outlet (111; 211; 311);
- a first flow restrictor (112; 212; 312) placed inside said first outlet (111; 211; 311);
- a first pressure sensor (113; 313) arranged to measure a pressure upstream of said first flow restrictor (112; 212; 312);
- a second branch (10"; 20") comprising a second proportional valve (12; 22; 32) having a second inlet (120; 220) and a second outlet (121; 221; 321);
- a second flow restrictor (122; 222; 322) placed inside said second outlet (121; 221; 321);
- a second pressure sensor (123; 323) arranged to measure a pressure upstream of said second flow restrictor (122; 222; 322);
- an electronic control module, which is preferably a Printed Circuit Board, operatively connected to the proportional valves (11, 12; 21, 22; 31, 32) so as to control operation of the fluidic system;
wherein the first outlet (111; 211; 311) and the second outlet (121; 221; 321) converge in a convergence region (13) downstream of both the first (112; 212; 312) and second (122; 222; 322) flow restrictors which have apertures of different diameter that define a lower-flow branch (20') and a higher-flow branch (20") of the fluidic circuit (10; 20; 30), wherein said first pressure sensor (113; 313) and said second pressure sensor (123; 323) are always in communication of fluid with no shut-off valve therebetween,
wherein the first proportional valve (11; 21; 31) and the second proportional valve (12; 22; 32) are operatively connected to said electronic control module so that when one is open the other is closed, whereby the flow in said convergence region (13) is either only the flow through the first proportional valve (11; 21; 31) or only the flow through the second proportional valve (12; 22; 32),
**characterized in that** no other pressure sensor is present downstream of both the first (112; 212; 312) and second (122; 222; 322) flow restrictors, **and in that** the electronic control module is configured and operatively connected to the pressure sensors (113, 123; 313, 323) so that the pressure sensor placed between the opened valve and the restrictor in its outlet acts as upstream pressure measurement device, while the pressure sensor placed between the closed valve and the restrictor placed in its outlet acts as downstream pressure measurement device for the proportionally opened valve.

2. A fluidic system according to claim 1, wherein the smaller aperture restrictor (212) has a diameter comprised between 0,1 mm and 0,4 mm, and the bigger aperture restrictor (222) has a diameter comprised between 0,5 mm and 2,0 mm.

3. A fluidic system according to any of the previous claims, wherein it further comprises one or more additional valves downstream of the convergence region (13).

4. A fluidic system according to claim 3, wherein one of said additional valves is a shut-off valve.

5. A fluidic system according to claim 4, wherein the shut-off valve has a section of passage such that the flow therethrough is at least 3 times the maximum flow coming out from the higher-flow branch (20"), and preferably at least 5 times such flow.

6. A fluidic system according to any of the previous claims, wherein at least one between the first (11; 21; 31) and the second proportional valve (12; 22; 32) is actuated by a shape memory alloy component.

7. A fluidic system according to claim 6, wherein said shape memory alloy component is a shape memory alloy wire.

8. A fluidic system (3000) according to any of the preceding claims, wherein the electronic control module (300') is integrated with the fluidic circuit (30) and one or more components (31, 32, 33, 313, 323; 3111, 3112) of the fluidic circuit (30) are mounted on the electronic control module (300').

## Patentansprüche

1. Fluidsystem, umfassend einen Fluidkreislauf (10; 20; 30), umfassend:
- einen ersten Zweig (10'; 20'), umfassend ein erstes Proportionalventil (11; 21; 31) mit einem ersten Einlass (110; 210) und einem ersten Auslass (111; 211; 311);
- einen ersten Durchflussbegrenzer (112; 212; 312), der innerhalb des ersten Auslasses (111; 211; 311) angeordnet ist;
- einen ersten Drucksensor (113; 313), der angeordnet ist, um einen Druck stromaufwärts des ersten Durchflussbegrenzers (112; 212; 312) zu messen;
- einen zweiten Zweig (10'; 20'), umfassend ein zweites Proportionalventil (12; 22; 32) mit einem zweiten Einlass (120; 220) und einem zweiten Auslass (121; 221; 321);
- einen zweiten Durchflussbegrenzer (122; 222; 322), der innerhalb des zweiten Auslasses (121; 221; 321) angeordnet ist;
- einen zweiten Drucksensor (123; 323), der angeordnet ist, um einen Druck stromaufwärts des zweiten Durchflussbegrenzers (122; 222; 322) zu messen;
- ein elektronisches Steuermodul, das vorzugsweise eine Leiterplatte ist und funktionell mit den Proportionalventilen (11, 12; 21, 22; 31, 32) verbunden ist, um den Betrieb des Fluidsystems zu steuern;
wobei der erste Auslass (111; 211; 311) und der zweite Auslass (121; 221; 321) in einem Konvergenzbereich (13) stromabwärts sowohl des ersten (112; 212; 312) als auch des zweiten (122; 222; 322) Durchflussbegrenzers zusammenlaufen, welche Öffnungen mit unterschiedlichem Durchmesser aufweisen, die einen Zweig (20') mit geringerem Durchfluss und einen Zweig (20") mit höherem Durchfluss des Fluidkreislaufs (10; 20; 30) definieren,
wobei der erste Drucksensor (113; 313) und der zweite Drucksensor (123; 323) stets in Fluidverbindung stehen, ohne ein Absperrventil dazwischen,
wobei das erste Proportionalventil (11; 21; 31) und das zweite Proportionalventil (12; 22; 32) mit dem elektronischen Steuermodul funktionell verbunden sind, sodass, wenn eines geöffnet ist, das andere geschlossen ist, wodurch der Fluss in dem Konvergenzbereich (13) entweder nur der Fluss durch das erste Proportionalventil (11; 21; 31) oder nur der Fluss durch das zweite Proportionalventil (12; 22; 32) ist,
**dadurch gekennzeichnet, dass** kein weiterer Drucksensor stromabwärts sowohl des ersten (112; 212; 312) als auch des zweiten (122; 222; 322) Durchflussbegrenzers vorhanden ist, **und dadurch, dass** das elektronische Steuermodul konfiguriert und funktionell mit den Drucksensoren (113, 123; 313, 323) verbunden ist, sodass der Drucksensor, der zwischen dem geöffneten Ventil und dem Begrenzer in dessen Auslass angeordnet ist, als Druckmessvorrichtung stromaufwärts fungiert, während der Drucksensor, der zwischen dem geschlossenen Ventil und dem in dessen Auslass angeordneten Begrenzer angeordnet ist, als Druckmessvorrichtung stromabwärts für das proportional geöffnete Ventil fungiert.

2. Fluidsystem nach Anspruch 1, wobei der Begrenzer mit kleinerer Öffnung (212) einen Durchmesser zwischen 0,1 mm und 0,4 mm aufweist und der Begrenzer mit größerer Öffnung (222) einen Durchmesser zwischen 0,5 mm und 2,0 mm aufweist.

3. Fluidsystem nach einem der vorstehenden Ansprüche, wobei es ferner ein oder mehrere zusätzliche Ventile stromabwärts des Konvergenzbereichs (13) umfasst.

4. Fluidsystem nach Anspruch 3, wobei eines der zusätzlichen Ventile ein Absperrventil ist.

5. Fluidsystem nach Anspruch 4, wobei das Absperrventil einen Durchgangsquerschnitt aufweist, derart, dass der Durchfluss dort hindurch mindestens das 3-Fache des maximalen Durchflusses, der aus dem Zweig (20") mit höherem Durchfluss austritt, und vorzugsweise mindestens das 5-Fache dieses Durchflusses beträgt.

6. Fluidsystem nach einem der vorstehenden Ansprüche, wobei mindestens eines von dem ersten (11; 21; 31) und dem zweiten Proportionalventil (12; 22; 32) durch eine Formgedächtnislegierungskomponente betätigt wird.

7. Fluidsystem nach Anspruch 6, wobei die Formgedächtnislegierungskomponente ein Formgedächtnislegierungsdraht ist.

8. Fluidsystem (3000) nach einem der vorstehenden Ansprüche, wobei das elektronische Steuermodul (300') in den Fluidkreislauf (30) integriert ist und eine oder mehrere Komponenten (31, 32, 33, 313, 323; 3111, 3112) des Fluidkreislaufs (30) auf dem elektronischen Steuermodul (300') montiert sind.

## Revendications

1. Système fluidique comprenant un circuit fluidique (10 ; 20 ; 30) comprenant :
- une première branche (10' ; 20') comprenant une première vanne proportionnelle (11 ; 21 ; 31) ayant une première entrée (110 ; 210) et une première sortie (111 ; 211 ; 311) ;
- un premier limiteur (112 ; 212 ; 312) de débit placé à l'intérieur de ladite première sortie (111 ; 211 ; 311) ;
- un premier capteur de pression (113 ; 313) disposé pour mesurer une pression en amont dudit premier limiteur (112 ; 212 ; 312) de débit ;
- une seconde branche (10" ; 20") comprenant une seconde vanne proportionnelle (12 ; 22 ; 32) ayant une seconde entrée (120 ; 220) et une seconde sortie (121 ; 221 ; 321) ;
- un second limiteur (122 ; 222 ; 322) de débit placé à l'intérieur de ladite seconde sortie (121 ; 221 ; 321) ;
- un second capteur de pression (123 ; 323) disposé pour mesurer une pression en amont du second limiteur (122 ; 222 ; 322) de débit ;
- un module de commande électronique, qui est de préférence une Carte de circuits imprimés, connecté de manière opérationnelle aux vannes proportionnelles (11, 12 ; 21, 22 ; 31, 32) afin de commander le fonctionnement du système fluidique ;
dans lequel la première sortie (111 ; 211 ; 311) et la seconde sortie (121 ; 221 ; 321) convergent dans une région de convergence (13) en aval à la fois des premier (112 ; 212 ; 312) et second (122 ; 222 ; 322) limiteurs de débit qui ont des ouvertures de diamètres différents qui définissent une branche à débit inférieur (20') et une branche à débit supérieur (20") du circuit fluidique (10 ; 20 ; 30),
dans lequel ledit premier capteur de pression (113 ; 313) et ledit second capteur de pression (123 ; 323) sont toujours en communication de fluide, sans vanne d'arrêt entre ceux-ci,
dans lequel la première vanne proportionnelle (11 ; 21 ; 31) et la seconde vanne proportionnelle (12 ; 22 ; 32) sont connectées de manière opérationnelle audit module de commande électronique de sorte que, lorsque l'une est ouverte, l'autre soit fermée, selon lequel le débit dans ladite région de convergence (13) est soit uniquement le débit à travers la première vanne proportionnelle (11 ; 21 ; 31), soit uniquement le débit à travers la seconde vanne proportionnelle (12 ; 22 ; 32),
**caractérisé en ce qu'**aucun autre capteur de pression n'est présent en aval à la fois des premier (112 ; 212 ; 312) et second (122 ; 222 ; 322) limiteurs de débit, **et en ce que** le module de commande électronique est configuré et connecté de manière opérationnelle aux capteurs de
pression (113, 123 ; 313, 323) de sorte que le capteur de pression placé entre la vanne ouverte et le limiteur situé à sa sortie serve de dispositif de mesure de pression en amont, tandis que le capteur de pression placé entre la vanne fermée et le limiteur situé à sa sortie serve de dispositif de mesure de pression en aval pour la vanne proportionnelle ouverte.

2. Système fluidique selon la revendication 1, dans lequel le limiteur (212) à plus petite ouverture a un diamètre compris entre 0,1 mm et 0,4 mm, et le limiteur (222) à plus grande ouverture a un diamètre compris entre 0,5 mm et 2,0 mm.

3. Système fluidique selon l'une quelconque des revendications précédentes, dans lequel il comprend en outre une ou plusieurs vannes supplémentaires en aval de la région de convergence (13).

4. Système fluidique selon la revendication 3, dans lequel l'une desdites vannes supplémentaires est une vanne d'arrêt.

5. Système fluidique selon la revendication 4, dans lequel la vanne d'arrêt a une section de passage de sorte que le débit à travers celle-ci soit au moins 3 fois le débit maximal sortant de la branche à débit supérieur (20"), et de préférence au moins 5 fois ce débit.

6. Système fluidique selon l'une quelconque des revendications précédentes, dans lequel au moins l'une entre les première (11 ; 21 ; 31) et seconde vannes proportionnelles (12 ; 22 ; 32) est actionnée par un composant en alliage à mémoire de forme.

7. Système fluidique selon la revendication 6, dans lequel ledit composant en alliage à mémoire de forme est un fil en alliage à mémoire de forme.

8. Système fluidique (3000) selon l'une quelconque des revendications précédentes, dans lequel le module de commande électronique (300') est intégré au circuit fluidique (30) et un ou plusieurs
composants (31, 32, 33, 313, 323 ; 3111, 3112) du circuit fluidique (30) sont montés sur le module de commande électronique (300').
